# EUROPEAN PATENT SPECIFICATION

(11) **EP 2 852 202 B1**
(45) Date of publication and mention of the grant of the patent: **04.12.2019**
(21) Application number: 13790826.5
(22) Date of filing: 02.04.2013
(51) Int. Cl.: H04W 28/16, H04L 29/08, H04W 88/08, H04W 88/18

(54) **APPARATUS AND METHOD FOR LOAD BALANCING IN A MOBILE COMMUNICATIONS NETWORK**
VORRICHTUNG UND VERFAHREN ZUR LASTVERTEILUNG IN EINEM MOBILFUNKNETZWERK
DISPOSITIF ET PROCÉDÉ D'ÉQUILIBRAGE DE CHARGE DANS UN SYSTÈME DE COMMUNICATION MOBILE

(30) Priority: 15.05.2012 JP 2012111799
(43) Date of publication of application: 25.03.2015
(73) Proprietor: NTT DOCOMO, INC., Chiyoda-ku Tokyo 100-6150 (JP)
(72) Inventor: TAMURA, Motoshi, Tokyo 100-6150 (JP); YATSU, Bunpei, Tokyo 100-6150 (JP); YAMAZAKI, Takahiro, Tokyo 100-6150 (JP); NAKAMURA, Tetsuya, Tokyo 100-6150 (JP); IWASHINA, Shigeru, Tokyo 100-6150 (JP); SHIMIZU, Takashi, Tokyo 100-6150 (JP)
(74) Representative: Viering, Jentschura & Partner mbB Patent- und Rechtsanwälte
(86) International application number: PCT/JP2013/060082
(87) International publication number: WO 2013/172107

(56) References cited:
- EP-A1- 1 703 665
- EP-A1- 1 895 785
- WO-A1-2011/074659
- US-A1- 2006 069 761
- US-A1- 2007 233 838
- MING LI ET AL.: 'INVESTIGATION OF NETWORK VIRTUALIZATION AND LOAD BALANCING TECHNIQUES IN LTE NETWORKS' 2012 IEEE 75TH VEHICULAR TECHNOLOGY CONFERENCE (VTC SPRING) 09 May 2012, pages 1 - 5, XP032202764
- YATSU ET AL.: 'AN APPROACH FOR USING NETWORK VIRTUALIZATION TECHNOLOGY IN MOBILE COMMUNICATION NETWORKS' 2012 NEN THE INSTITUTE OF ELECTRONICS, INFORMATION AND COMMUNICATION ENGINEERS SOGO TAIKAI KOEN RONBUNSHU (TSUSHIN 1) 06 March 2012, pages 581 - B-15-2, XP008175522

## Description

### Technical Field

The present invention relates to a control node included in a mobile communication system, and a communication control method.

### Background Art

In a conventional mobile communication network, communication processing nodes responsible for a communication process in respective areas are connected. For example, a switching center corresponding to a position registration area is provided as a device performing a communication process, as described in Patent Literature 1. Patent Literature 2 discloses a system and method for balancing the load of virtual machines in a computer network spanning across physical servers. When a server of the computer network becomes overloaded, at least one of the virtual machines of the server is migrated to another server. Since the method disclosed prevents the servers from reaching the overloaded state, computing resources are optimized. Patent Literature 3 discloses a communication system and a communication method, which are capable of increasing the utilization efficiency of the network facility by efficiently calculating a highly accurate prediction of the demand for the network facility, and to provide a network load prediction node and a network configuration management node, which are suitable for use in these communication system and method. The disclosed communication system and method rely on mobility control nodes, configured to manage a service area where each user terminal is located, session control nodes, configured to manage a communication history of a communication performed by each user terminal, and on network load prediction nodes, configured to acquire user information of the user terminal located in each service area and the communication history of each user terminal at predetermined timing, and to calculate a communication demand prediction in each service area based on the user information and the communication history.

### Citation List

### Patent Literature

[Patent Literature 1] Japanese Patent Laid-Open No. 2009-165163
[Patent Literature 2] US Patent No. US2006/0069761
[Patent Literature 3] European Patent No. EP 1703665

### Summary of Invention

### Technical Problem

Usually, facilities in respective areas are designed in anticipation of processing power at times at which process requests, which vary over time, are most frequent. However, since facility design is normally performed based on a traffic amount at ordinary times, congestion may occur when traffic exceeding predicted traffic is generated. In this case, a great amount of communication becomes hard to connect due to regulations. In addition, since a mobile communication terminal moves according to a time zone such as a time when a user who uses the mobile communication terminal is at home, a time when the user is commuting, or a time when the user is working, processing load of a node that is actually used changes according to the time zone, and facility use efficiency at a time other than busiest times is degraded.

The present invention has been made in view of the aforementioned problems and an object of the present invention is to provide a control node and a communication control method capable of securing process resources necessary for areas and increasing facility use efficiency in a mobile communication network.

### Solution to Problem

The invention is set out in the appended claims.

The embodiments and/or examples disclosed in the following description which are not covered by the appended claims are considered as not being part of the invention.

### Advantageous Effects of Invention

According to an embodiment of the present invention, it is possible to dynamically provide process resources necessary for the area. For example, when the process resources in the area are insufficient, it is possible to mutually accommodate the process resources, including those of other areas. Accordingly, it is possible to secure process resources necessary for the areas and increase facility use efficiency in the mobile communication network.

### Brief Description of Drawings

Fig. 1 is a diagram illustrating a functional configuration of a network manager that is a control node according to an embodiment of the present invention and a mobile communication system including the network manager.
Fig. 2 is a diagram illustrating an area in which a mobile communication terminal is present, a physical server and a virtual call processing server associated with the area, and a configuration of a node of an OpenFlow network.
Fig. 3 is a diagram conceptually illustrating a usage rate of each physical server.
Fig. 4 is a table (virtual server resource management table) showing information of the usage rate of each physical server detected by the network manager.
Fig. 5 is a diagram illustrating a hardware configuration of the network manager which is a control node according to an embodiment of the present invention, and other devices constituting the mobile communication system.
Fig. 6 is a sequence diagram illustrating a process (a communication control method) executed by the network manager, which is a control node according to an embodiment of the present invention, and the mobile communication system.
Fig. 7 is a diagram illustrating a flow table according to a process that is held by a node of an OpenFlow network.
Fig. 8 is a virtual server resource management table according to the process.
Fig. 9 is a diagram illustrating a configuration of, for example, the physical server and the virtual call processing server according to the process.
Fig. 10 is a diagram illustrating a flow table according to the process held by the node of the OpenFlow network.
Fig. 11 is a virtual server resource management table according to the process.
Fig. 12 is a diagram illustrating a configuration of, for example, a physical server and the virtual call processing server according to the process.
Fig. 13 is a diagram illustrating a flow table according to the process held by the node of the OpenFlow network.
Fig. 14 is a virtual server resource management table according to the process.
Fig. 15 is a diagram illustrating a conventional relationship between a traffic amount and a facility (amount of the facility).
Fig. 16 is a diagram illustrating a relationship between a traffic amount and a facility (amount of the facility) according to an embodiment of the present invention.

### Description of Embodiments

Hereinafter, embodiments of a control node and a communication control method according to the present invention will be described in detail with reference to the drawings. In addition, the same elements are denoted with the same reference signs in the description of the drawings and repeated description will be omitted.

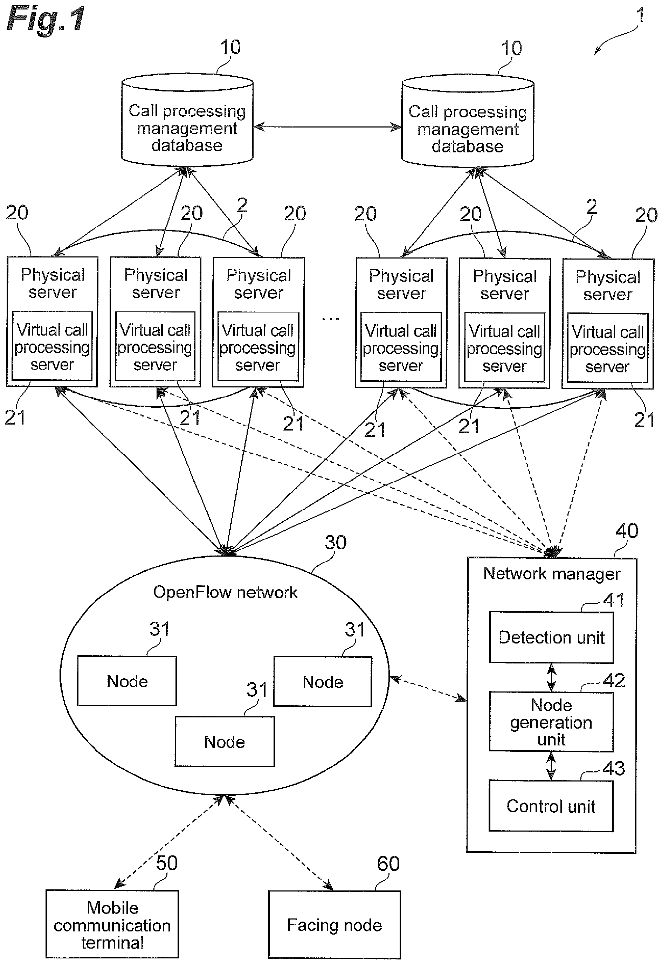

A configuration of the mobile communication system 1 including a network manager 40 which is a control node according to the embodiment is illustrated in Fig. 1. The mobile communication system 1 is a system that provides a mobile communication function to the mobile communication terminal (mobile device) 50. The mobile communication terminal 50 is a device which is used by a user, is connected to the mobile communication system (mobile communication network) by wireless communication, and performs mobile communication. Specifically, the mobile communication terminal 50 corresponds to, for example, a mobile phone. The mobile communication terminal 50, for example, establishes call connection with a facing node 60 via the mobile communication system 1 and performs communication. For example, the facing node 60 corresponds to another mobile communication terminal, a server device which provides various services to the mobile communication terminal 50, or a device (e.g., a GGSN (Gateway GPRS Support Node)) for connection to other communication networks. The mobile communication terminal 50 can perform mobile communication according to a contract between a user of the mobile communication terminal 50 and a communication carrier of the mobile communication system 1. In addition, the mobile communication terminal 50 is the same as a conventional mobile communication terminal.

The mobile communication system 1 includes call processing management databases 10, one or more (or a plurality of) physical servers (physical machines; PMs) 20, an OpenFlow network 30, and the network manager 40, as illustrated in Fig. 1. In addition, the configurations 10, 20, 30 and 40 constitute a core network of the mobile communication system (mobile communication network) 1. In each physical server 20, a virtual call processing server 21 that is a communication processing node performing a communication process in the mobile communication system 1 is realized, as will be described below.

The call processing management database 10 is a database that holds data necessary for call processing. The call processing management database 10 associates this data with, for example, information for identifying the mobile communication terminal 50 and holds the data for each mobile communication terminal 50. Specifically, state information indicating a state of the call processing and a subscriber profile related to the mobile communication terminal 50 is held as the data necessary for call processing. The state information includes an area in which the mobile communication terminal 50 is present and information indicating whether the mobile communication terminal 50 is during communication or standby. This information is read and updated (written) by the virtual call processing server 21, as will be described below.

In addition, data of the subscriber profile includes information such as a phone number, authentication information, and contract speed of the mobile communication terminal 50. This information is newly stored (generated) as a subscriber profile in the call processing management database 10 when the user of the mobile communication terminal 50 has contracted with the communication carrier of the mobile communication system 1. This information is read by the virtual call processing server 21, but not updated (written) by the virtual call processing server 21. In addition, the data stored for each mobile communication terminal 50 includes items for which both reading (Read) and writing (Write) occur and items for which only reading (Read) occurs, as described above. Prevention of delay of Read caused by waiting for synchronization of Write can be devised by separately managing records of these items in the call processing management database 10.

The call processing management database 10 is connected to each of one or more (or a plurality of) virtual call processing servers 21 (physical servers 20), and reference, registration or update of the data held in the call processing management database 10 is performed by the virtual call processing server 21. While the call processing management database 10 can take any configuration as a database, the call processing management database 10 is a distributed database which is realized with a plurality of server devices, as illustrated in Fig. 1, in consideration of holding of the data necessary for call processing, and may be configured so that there is no SPOF (Single Point of Failure).

Here, the call processing is a process related to call connection between the mobile communication terminal 50 and the facing node 60 via the mobile communication system 1. For example, call processing is a process of establishing call connection between the mobile communication terminal 50 and the facing node 60 (referred to also as communication session connection) or a process of disconnecting the call connection. Further, a process for causing the mobile communication terminal to be present in the mobile communication system 1, that is, a position registration process may be included in the call processing in the present embodiment.

In addition, in the embodiment, the call processing management database 10 described above need not necessarily be included in the mobile communication system 1, and information of a subscriber profile and an area in which the terminal is present may be acquired from a subscriber information management device such as an HLR (Home Location Register) by the virtual call processing server 21, as in a conventional mobile communication system.

The physical server 20 is a physical device which performs a communication process in the mobile communication system 1. The communication process is any process related to mobile communication, including the call processing described above. The communication process is actually executed by the virtual call processing server 21 that is realized in the physical server 20. The physical server 20 is connected to the mobile communication terminal 50 and the facing node 60 via the OpenFlow network 30, as illustrated in Fig. 1, and is able to transmit and receive information. One or more (or a plurality of) physical servers 20 are included in the mobile communication system 1. In addition, the plurality of physical servers 20 are connected to one another and are able to mutually transmit and receive information.

A plurality of bases (places such as data centers) 2 may be provided and one or more physical servers 20 may be provided in each base 2, as illustrated in Fig. 1. The physical servers 20 are provided in the plurality of bases in consideration of the fact that the physical server 20 of each base 2 is responsible for call processing in the nearest area, and a substituting process when the call physical server 20 in an adjacent area fails due to disaster.

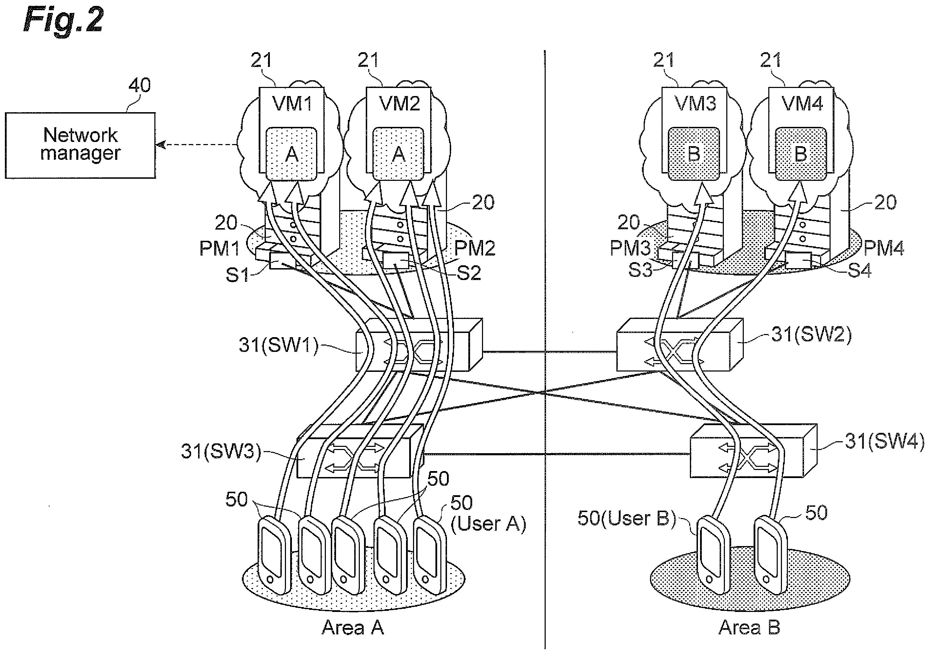

The physical servers 20 (base 2), for example, are provided in each area in which the mobile communication terminal 50 performs mobile communication (the mobile communication terminal 50 is present). Specifically, PM1 and PM2 that are physical servers 20 corresponding to area A are installed in area A, and PM3 and PM4 that are physical servers 20 corresponding to area B are installed in area B, as illustrated in Fig. 2.

In addition, each physical server 20 has a function of notifying the network manager 40 of a usage rate of the own physical server 20 as processing load of a communication process of the own physical server 20. This function will be described below in greater detail.

The virtual call processing servers 21 are one or more (or a plurality of) communication processing nodes that perform the communication process of the mobile communication terminal 50. The virtual call processing server 21 is realized in any of the physical servers 20. The virtual call processing server 21 is a virtual server that is realized by a program being executed on the physical server 20 using a virtual machine (VM) technique. In addition, a plurality of virtual call processing servers 21 can also be realized in one physical server 20. One or more (or a plurality of) virtual call processing servers 21 are included in the mobile communication system 1. The virtual call processing server 21 corresponds to, for example, an SGSN (Serving GPRS Support Node) in a GPRS (General Packet Radio Service) system that is a conventional mobile communication system, or a node such as an MME (Mobility Management Entity) or an S-GW (Serving Gateway) in an LTE/EPC (Long Term Evolution/Evolved Packet Core) system. Alternatively, the virtual call processing server 21 corresponds to a node such as a CSCF (Call Session Control Function) or an AS (Application Server) in an IMS (IP Multimedia Subsystem).

The virtual call processing server 21 performs a communication process using, for example, reception of a request from the mobile communication terminal 50 as a trigger. This request, for example, is a call origination request (a request for call connection establishment) or a position registration request. The virtual call processing server 21 performs the communication process with reference to the request from the mobile communication terminal 50 and the information stored in the call processing management database 10, as necessary. In addition, the virtual call processing server 21 may write (store) information of a result of the communication process to the call processing management database 10.

The virtual call processing server 21 is realized in association with an area in which the mobile communication terminal 50 performs mobile communication (the mobile communication terminal 50 is present). For example, VM1 and VM2 that are virtual call processing servers 21 realized on PM1 and PM2, respectively, are realized as VMs performing the communication process related to the mobile communication terminal 50 present in area A, as illustrated in Fig. 2. VM3 and VM4 that are virtual call processing servers 21 realized on PM3 and PM4, respectively, are realized as VMs performing the communication process related to the mobile communication terminal 50 present in area B. In addition, while the virtual call processing server 21 is usually realized on the physical server 20 to which the area corresponds, as described above, the virtual call processing server 21 may be realized on the physical server 20 necessarily having no correspondence relationship with the area, as will be described below.

In the mobile communication system 1, the area in which the mobile communication terminal 50 is present is associated with the virtual call processing server 21. In other words, a signal related to the communication process from the mobile communication terminal 50 present in area A is relayed to the node 31 of the OpenFlow network 30 and transmitted to the virtual call processing server 21 associated with area A.

For example, since base stations (BTSs, eNBs that are not illustrated) included in the mobile communication system 1 are provided in such a manner that their positions are fixed, the base stations correspond to the areas. The base station holds information indicating the virtual call processing server 21 related to the area to which the signal is to be transmitted, and transmits the signal to the virtual call processing server 21 associated with the area based on the information. Specifically, in an example of an existing LTE/EPC process, a signal from a base station is handled by a plurality of higher (S1-Flex) MME/S-GWs (corresponding to the virtual call processing servers 21 of the embodiment) on which the base station is dependent. The base station stores the higher virtual call processing servers 21, and transmits the signal to any of the virtual call processing servers 21. In addition, once the virtual call processing server 21 to perform a process is determined, a subsequent virtual call processing server 21 is identified by a temporary identifier (GUTI (Globally Unique Temporary Identifier) and the like) included in the signal of the mobile communication terminal 50. In addition, although the example in which the area in which the mobile communication terminal 50 is present and the virtual call processing server 21 are associated by the base station has been shown above, the area and the virtual call processing server 21 may be associated using a method other than the above method.

In addition, the physical server 20 and the virtual call processing server 21 are associated with the area as described above for the following reasons. If the communication process is performed by the physical server 20 and the virtual call processing server 21 in the area in which the mobile communication terminal is present, a length along which a signal physically flows in the mobile communication network is shortened. As a result, the traffic amount is decreased and relay cost is decreased. In other words, one reason is relay cost. In addition, the base station managed in the virtual call processing server 21 can be limited to only the base station in the area. When the virtual call processing server 21 performs communication processes of the mobile communication terminals 50 in all areas, the virtual call processing server 21 needs to manage base stations in all the areas. In other words, another reason is management of the network.

In addition, arrangement (deployment) of the physical servers 20 may be performed as follows. First, processing load of communication necessary for each area in each time zone is learned to obtain a range of processing load for each day of the week. An amount of the facility obtained by considering a safety factor in an upper limit of total necessary processing load of the mobile communication network in each time zone is used as a total facility amount to prepare the physical servers 20. Furthermore, the total processing load is prorated by an average use amount for each area to deploy the physical servers 20. Accordingly, it is possible to perform appropriate arrangement (deployment) of the physical servers 20 according to the processing load of the communication.

The OpenFlow network 30 is a flow control network connected to the physical servers 20, the mobile communication terminal 50 and the facing node 60, and constitutes a communication path between such devices. In addition, the OpenFlow network 30 and the mobile communication terminal 50 are usually connected via a base station and a radio network controller (RNC). The OpenFlow network 30 includes a plurality of nodes 31 that are OpenFlow switches connected to one another. The node 31 corresponds to a device which is usually used as an OpenFlow switch (SW) of the OpenFlow network. The OpenFlow network 30 performs transmission and reception of the information under control of an OpenFlow controller of the network manager 40, as will be described below. Specifically, each node 31 of the OpenFlow network 30 receives, from the network manager 40, a flow entry indicating a node to which information received by the own node is to be transmitted, and performs transmission and reception of the information according to the flow entry. While the OpenFlow network is described in the present description, a network known as an SDN (Softwarer difined network) performing similar flow control and a flow transfer process according to the control may be used.

The network manager 40 controls realization (implementation) of the virtual call processing servers 21 on the physical servers 20 as a function according to the embodiment. In addition, the network manager 40, the network manager 40 controls transmission and reception of the information in the OpenFlow network 30 as a function according to the embodiment. The control of the transmission and reception of the information in the OpenFlow network 30, for example, is performed by the OpenFlow controller performing load balancing control, included in the network manager 40. Control to be concretely performed will be described below. The network manager 40 is connected to each physical server 20, and can perform transmission and reception of information.

The network manager 40 constitutes a network management control system. The network management control system has functions of a network operation policy, a network operation and control scenario, network resource management, network topology management, network topology change, network resource control, virtual server control, and flow control. The network operation policy is a function of holding a determination criterion (e.g., a quality condition for service or a band to be secured) for determining how to control the network based on a state (e.g., congestion or failure) recognized by the network resource management. The network operation and control scenario is a function of giving a control procedure for causing the state recognized by the network management to be a state satisfying the policy with reference to the network resource operation policy. The network resource management is a function of receiving and recognizing information from, for example, a server or a switch deployed in the network.

The network topology management is a function of recognizing and managing a device connection situation in the network from the information recognized by the network resource management. The network topology change is a function of changing a device connection state of the network through arrangement and migration control of the virtualization machine of a virtualization server or setting change control of the switch or the like. The network resource control is arrangement and migration control of the virtual machine of the virtualization server or setting change control of the switch or the like. The virtual server control is a function of receiving information of the server from the virtualization server (which is the same as the physical server) to recognize the state of the server (e.g., a CPU usage rate, or presence or absence of failure). The flow control is a function of performing flow control of the OpenFlow network 30. The network manager 40 according to the embodiment uses the above functions.

The network manager 40 comprises a detection unit 41, a node generation unit 42, and a control unit 43 as functions according to the embodiment, as illustrated in Fig. 1.

The detection unit 41 is a detection means that detects processing load of the communication process of each physical server 20. The detection unit 41 detects a usage rate as the processing load of the communication process. The usage rate is a rate indicating how much resources are used by the communication process in the virtual call processing server 21 with respect to the resources that can be processed by the physical server 20. The usage rate of the physical server 20 can be concretely calculated as a ratio of a total amount of a common process and a process used in the virtual call processing server 21 realized (hosted) in the physical server 20 to a sum of resources of a CPU (Central Processing Unit) included in the physical server 20.

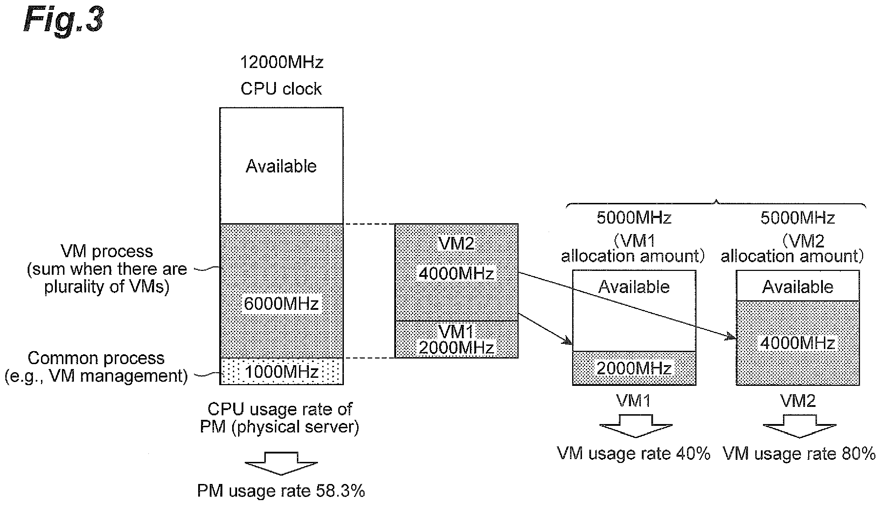

For example, the CPU resources of the physical server 20 may be expressed as a sum of CPU clock speeds of core processors (e.g., four cores) included in the physical server 20, as illustrated in Fig. 3. Here, a sum of the CPU clocks is assumed to be 12000 MHz. In this case, when 1000 MHz is used for a common process (virtual machine (VM) management) and 6000 MHz is used for a process of the virtual call processing server 21 (a VM process; a sum when a plurality of virtual call processing servers 21 are realized), the usage rate of the physical server 20 is (1000+6000)/12000 = 58.3%.

In addition, a usage rate of each virtual call processing server 21 realized on the physical server 20 can be calculated. The usage rate of the virtual call processing server 21 (the usage rate of the VM) can be calculated as a ratio of an amount used for a process by the virtual call processing server 21 to the resources that are allocated in the physical server 20 for the purpose of the virtual call processing servers 21.

In the example illustrated in Fig. 3, for each of VM1 and VM2 that are the virtual call processing servers 21, 5000 MHz of the CPU clock of physical server 20 is allocated and 2000 MHz is allocated to a common process. In this case, when VM1 uses 2000 MHz and VM2 uses 4000 MHz, the usage rate of VM1 is 2000/5000 = 40%, and the usage rate of the VM2 is 4000/5000 = 80%. In addition, in the example described above, since the two virtual call processing servers 21 are allocated on one physical server 20, the resources per one virtual call processing server 21 are 5000 MHz. However, when only one virtual call processing server 21 is allocated, the resources of 10000 MHz are allocated.

Each physical server 20 calculates each of a usage rate of the physical server 20 and a usage rate of the virtual call processing server 21 realized (allocated) on the physical server 20 and transmits information indicating the usage rate to the network manager 40. Here, the information indicating the usage rate of the physical server 20 is transmitted in association with information for identifying the physical server 20, and the information indicating the usage rate of the virtual call processing server 21 is transmitted in association with the information for identifying the virtual call processing server 21.

The transmission of the information indicating the usage rate is performed periodically (at regular time intervals). In addition, the physical server 20 monitors each usage rate. When the usage rate is equal to or more than a previously set threshold or exceeds the threshold, the physical server 20 performs transmission of the information indicating the usage rate at that time point. The detection unit 41 detects the usage rate by receiving the information of the usage rate transmitted from each physical server 20. In addition, the detection of the usage rate by the detection unit 41 may be performed using any method as well as the method described above.

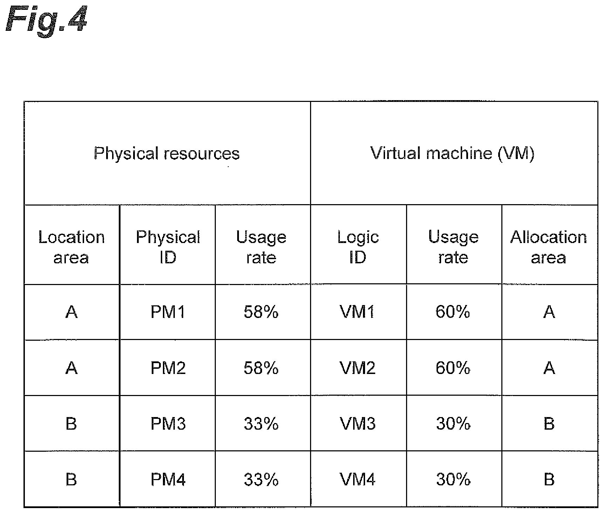

The information of the usage rate that is detected and managed by the detection unit 41 is, for example, information of a table (a virtual server resource management table) illustrated in Fig. 4. As shown in the table of Fig. 4, the usage rate of the physical server 20 and the usage rate of each virtual call processing server 21 are associated. Information (physical resources of Fig. 4) on the usage rate of the physical server 20 includes data of columns of "location area," "physical ID" and "usage rate." The "location area" is information indicating an area in which the physical server 20 is installed. The "physical ID" is information for identifying the physical server 20. The "usage rate" is information indicating the usage rate of the physical server 20.

Information (virtual machine (VM) of Fig. 4) on the usage rate of the virtual call processing server 21 includes data of columns of "logic ID," "usage rate" and "allocation area." The "logic ID" is information for identifying the virtual call processing server 21. The "usage rate" is information indicating the usage rate of the virtual call processing server 21. The "allocation area" is information indicating the area in which the mobile communication terminal 50 with which the virtual call processing server 21 performs a communication process is present. When the detection unit 41 detects the usage rate of each physical server 20, the detection unit 41 outputs the detected information to the node generation unit 42.

In addition, the detection unit 41 may detect the number of mobile communication terminals 50 present in each area. This detection, for example, is performed by detecting the number of mobile communication terminals 50 present (position-registered) in each position registration area in the mobile communication system 1. The number of mobile communication terminals 50 present in each position registration area is recognized by a device performing management of presence of terminals in areas, such as an HLR, in the mobile communication system 1. The detection unit 41 inquires of the device about the number of mobile communication terminals 50 present in each position registration area, and acquires information.

In addition, the area associated with the physical server 20 and the virtual call processing server 21 (an area handled in call processing) and the position registration area do not necessarily match. When the area associated with the physical server 20 and the virtual call processing server 21 (the area handled in call processing) and the position registration area match, the number of mobile communication terminals 50 present in the position registration area is the number of mobile communication terminals 50 present in the area. When the area associated with the physical server 20 and the virtual call processing server 21 is larger than the position registration area (when a plurality of position registration areas are included in the area), the numbers of the mobile communication terminals 50 present in the position registration areas included in the area are summed and regarded as the number of mobile communication terminals 50 present in the area. When the area associated with the physical server 20 and the virtual call processing server 21 is smaller than the position registration area (when a plurality of areas are included in the position registration area), the number of mobile communication terminals 50 present in the position registration area is prorated by an area ratio of the area or a parameter specific to the area to calculate the number of mobile communication terminals 50 present in the area. In addition, in another method, the number of mobile communication terminals 50 attached to the virtual call processing server 21 may be reported together, for example, at the time of reporting the usage rate, and summed for each call processing area (an area handled in call processing) such that the number of mobile communication terminals 50 present in the area is calculated.

The detection unit 41 outputs the information indicating the detected number of mobile communication terminals 50 present in each area to the node generation unit 42. This output, for example, is performed periodically (at regular time intervals), like the output of the information of the usage rate.

The node generation unit 42 is a node generation means that generates the virtual call processing server 21 for each area that is realized on the physical server 20, based on the information indicating the usage rate input from the detection unit 41. In other words, the node generation unit 42 determines which virtual call processing server 21 is to be allocated to which physical server 20 based on the usage rate, and generates the virtual call processing server 21 on the physical server 20 according to the determined allocation. The generation of the virtual call processing server 21, for example, is performed through replication of the virtual call processing server 21 already realized on the physical server 20 to another physical server 20. With the generation of the virtual call processing server 21, the node generation unit 42 also performs control of, for example, migration to or from the physical server 20 of the other virtual call processing servers 21.

The allocation of the virtual call processing server 21 to the physical server 20, for example, is performed as follows. The node generation unit 42 determines whether the usage rate of each virtual call processing server 21 is equal to or more than a previously set threshold or exceeds the threshold. The threshold is set to, for example, 80%. When the node generation unit 42 determines that the usage rate of the virtual call processing server 21 is equal to or more than the threshold or exceeds the threshold, the node generation unit 42 determines the allocation of the virtual call processing server 21 so that the usage rate is less than 80% or is equal to or less than 80%. For example, when the usage rate of the other physical server 20 is low, the virtual call processing server 21 whose usage rate has been equal to or more than the threshold or has exceeded the threshold is replicated (scaled) in the other physical server 20 to decrease the usage rate.

In addition, in order to generate the physical server 20 having a low usage rate, the virtual call processing servers 21 realized in the different physical servers 20 may be put into one physical server 20 (a migration process). A specific example thereof will be described below.

The control of virtualization of the virtual call processing server 21 by the node generation unit 42 is performed using virtual machine technology. Specifically, the control is control such as new provisioning of the virtual call processing server 21 by sending an instruction to a hypervisor of each physical server 20 when the node generation unit 42 performs, for example, replication, migration, addition, or removal of the virtual call processing servers 21. Accordingly, it is possible to perform appropriate virtualization. More specifically, provisioning of the virtual machine by the node generation unit 42 and flow control by the control unit 43 are controlled in an integrated manner (processes are synchronized), enabling more appropriate processes such as replication, migration, addition, or removal, as will be described below.

In addition, the node generation unit 42 may generate (allocate) the virtual call processing server 21 in each area that is realized on the physical server 20 according to time, based on a history of the usage rate detected by the detection unit 41. The node generation unit 42 stores information indicating the usage rate input from the detection unit 41 as a history (learning data), and calculates processing load (statistical information) of communication necessary for each time zone and each area from the history. In addition, distinction by the day of the week is included in the time zone. The necessary processing load of communication, for example, is calculated based on an average value of past processing loads calculated in respective time zones and areas. The processing load, for example, is a sum of CPU clocks used in the processes of the virtual call processing servers 21 in the respective areas, and is calculated based on the usage rate detected by the detection unit 41. The node generation unit 42 deploys the virtual call processing server 21 as process resources of the area on the physical server 20 of each area according to the calculated processing load of communication necessary for each time zone and each area. However, the virtual call processing servers 21 need not necessarily be deployed on the physical server 20 in the corresponding area.

It is possible to prevent generation of a congestion state from occurring by predictively preparing process resources before a real change in an amount of the process resources occurs, as described above.

In addition, the node generation unit 42 may generate the virtual call processing server 21 for each area that is realized on the physical server 20, based also on the number of mobile communication terminals 50 present in each area detected by the detection unit 41. For example, the node generation unit 42 may obtain and hold unit processing load necessary for each mobile communication terminal 50 from the processing load of communication in each area in each time zone in the past and the number of mobile communication terminals 50 present in each area. When the node generation unit 42 notices an unusual increase in mobile communication terminals 50, the node generation unit 42 deploys the virtual call processing servers 21 that are process resources according to the unit processing load × the number of terminals.

The node generation unit 42 outputs, to the control unit 43, information indicating a state of the generated virtual call processing server 21 in each physical server 20, that is, which virtual call processing server 21 has been generated (or deployed) on which physical servers 20.

The control unit 43 is a control means that performs control to transmit the signal related to the communication process from the mobile communication terminal 50 to the virtual call processing server 21 generated in association with the area in which the mobile communication terminal 50 is present by the node generation unit 42. Specifically, the control unit 43 configures the OpenFlow network 30 to transmit the signal related to the communication process from the mobile communication terminal to the virtual call processing server 21 associated with the area in which the mobile communication terminal 50 is present (so that the communication process is performed by the virtual call processing server 21 associated with the area in which the mobile communication terminal 50 is present).

When a plurality of virtual call processing servers 21 are associated with the area, the control unit 43 may cause a signal to be transmitted so that a process load becomes as uniform as possible among the virtual call processing servers 21. In addition, the virtual call processing server 21 to which the signal related to the communication process is transmitted may be determined according to the mobile communication terminal 50. For example, a criterion (an execution scenario) for determination of the virtual call processing server 21 to which the signal related to the communication process is transmitted may be stored in the control unit 43 by the communication carrier of the mobile communication system 1 in advance.

The control unit 43 generates a flow entry so that the signal related to the communication process from the mobile communication terminal 50 is transmitted to the virtual call processing server 21 associated with the area in which the mobile communication terminal 50 is present, and transmits the generated flow entry to each node 31 of the OpenFlow network 30.

The determination of the virtual call processing server 21 to which the signal related to the communication process is transmitted, and the generation of the flow entry may be performed, for example, in each certain period of time (e.g., a specific time) or when the deployment of the virtual call processing servers 21 is changed by the node generation unit 42. This is a functional configuration of the network manager 40 according to the embodiment.

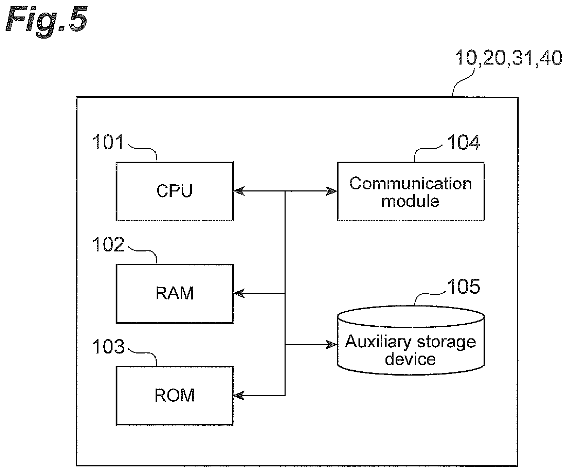

A hardware configuration of a server device constituting the call processing management database 10, the physical server 20, the node 31 of the OpenFlow network 30 and the network manager 40 according to the embodiment is illustrated in Fig. 5. The server device includes a computer including hardware such as a CPU 101, a RAM (Random Access Memory) 102 and a ROM (Read Only Memory) 103 that constitute a main storage device, a communication module 104 for communication, and an auxiliary storage device 105 such as a hard disk, as illustrated in Fig. 5. The function of each of the nodes 10, 20, 31 and 40 described above is exhibited by such components operating according to a program or the like. This is a configuration of the network manager 40 according to the embodiment and the mobile communication system 1.

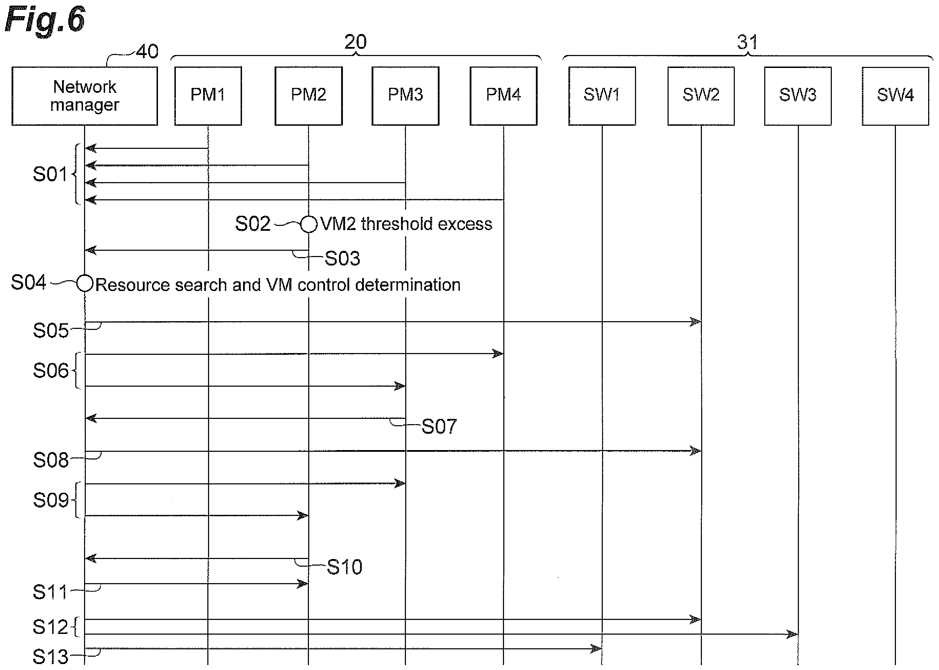

Next, a communication control method that is a process executed in the network manager 40 according to the embodiment and the mobile communication system 1 will be described using a sequence diagram of Fig. 6. This process will be described using the configuration illustrated in Fig. 2 as an example. As illustrated in Fig. 2, the communication process (communication call) according to the mobile communication terminal 50 present in area A is performed in PM1 and PM2 that are the physical servers 20 deployed in area A. The communication process (communication call) according to the mobile communication terminal 50 present in area B is performed in PM3 and PM4 that are the physical servers 20 deployed in area B. VM1, VM2, VM3 and VM4 that are the virtual call processing servers 21 are arranged (generated) on PM1, PM2, PM3 and PM4 to perform the communication process, respectively.

In addition, the SW1 to SW4 that are nodes (OpenFlow switches) 31 in the OpenFlow network 30 relay data between the mobile communication terminal 50 and the physical server 20. SW1 to SW4 are connected to one another. SW1 is connected to PM1 and PM2, SW2 is connected to PM3 and PM4, SW3 is connected to the mobile communication terminal 50 in area A, and SW4 is connected to the mobile communication terminal 50 in area B.

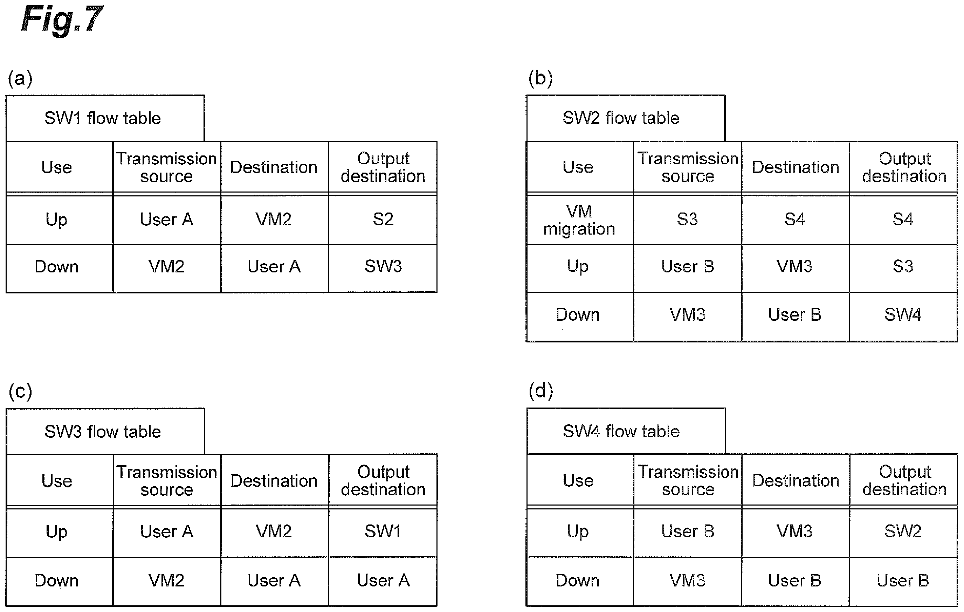

Examples of flow tables in which flow entries of SW1, SW2, SW3 and SW4 are summarized are illustrated in Figs. 7(a), (b), (c) and (d), respectively. In these examples, flow entries related to user A that is the mobile communication terminal 50 present in area A illustrated in Fig. 2 and user B that is the mobile communication terminal 50 present in area B illustrated in Fig. 2 are shown. Each flow entry is information for defining an "output destination" (action) to which a flow (signal) corresponding to a combination of "transmission destination" and "destination" (matching fields) is to be sent. In addition, there is a column "use" in the flow tables illustrated in Fig. 7, which is described to explain which signal the flow entry is for, but this is not set in a real flow table. Up indicates a flow entry for a signal from the mobile communication terminal 50 to the physical server 20, and Down indicates a flow entry for a signal from the physical server 20 to the mobile communication terminal 50. A flow entry for VM migration in the flow table of SW2 will be described below.

The "transmission source" and the "destination" indicate devices (device addresses) of the transmission source and the destination contained in a header of the signal, respectively. In the node 31, information obtained from the signal, which is a relay target, and the "transmission source" and the "destination," which are the matching fields, are compared, and a port to which the signal is to be transmitted is determined as an action (in this example, determination of "output destination") when the information and the "transmission source" and "destination" match. An output port number of the output portion (information for identifying the port which is the output destination) to which the signal that is the relay target is to be output is set in the real "output destination." In Fig. 7, SW1 to SW4, users A and B, and S1 to S4 (corresponding to input ports of VM1 to VM4) shown as the output destinations describe information of destinations to which the respective output ports are connected.

In the mobile communication system 1, the usage rates (process loads) of the physical server 20 itself and the VM hosted by the physical server 20 are measured by PM1 to PM4, and information indicating the measured usage rates is transmitted from each of PM1 to PM4 to the network manager 40. In the network manager 40, the information indicating the usage rate is received by the detection unit 41 (S01; detection step). Here, the detected usage rate, for example, is a value such as the virtual server resource management table illustrated in Fig. 4. VM1 and VM2 have high usage rates of 60%, and VM3 and VM4 have slightly low usage rates of 30%. In the network manager 40, the values of the virtual server resource management table are constantly updated, and the information indicating the usage rate is output from the detection unit 41 to the node generation unit 42 each time the information indicating the usage rate is detected.

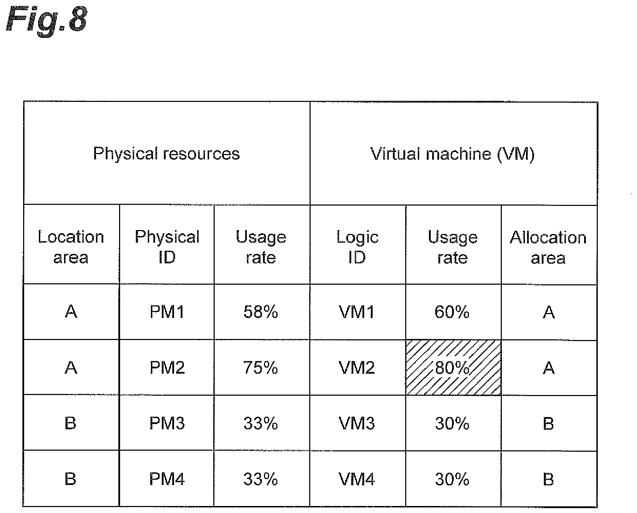

Here, the request (service request) of the communication process from area A increases and the usage rate of the VM2 is equal to or more than a threshold (e.g., 80%) set in advance. In PM2, it is detected that the usage rate of the VM2 is equal to or more than the threshold (S02), and PM2 notifies the network manager 40 that the usage rate is equal to or more than 80% and a process congestion state arrives (information of the usage rate of 80% or more) (S03). In the network manager 40, the notification is received by the detection unit 41 and the congestion state of VM2 (which indicates that the usage rate is equal to or more than the threshold) is detected (S03; detection step). Here, values of the virtual server resource management table are shown as in Fig. 8. This information is also output from the detection unit 41 to the node generation unit 42.

Then, the node generation unit 42 performs search to determine whether or not there is room for processing in the other physical servers 20 in order to decrease the usage rate of VM2. For example, the physical server 20 having sufficient room for processing load of half (4000 MHz) of the processing load (8000 MHz) of VM2 is searched for. In this case, search is performed on an availability situation of the physical server 20 (resources) in the same area. If there is no sufficient available capacity in the physical server 20 in the same area, then search is performed on the availability situation of the physical server 20 (resources) in a neighboring area.

Here, the usage rates of PM3 and PM4 are low. Even when processing loads of VM3 (3000 MHz) and VM4 (3000 MHz) hosted by PM3 and PM4 are summed, the usage rate of one physical server 20 is confirmed not to exceed the amount (10000 MHz) allocated to the VMs. As a result, VM3 on PM3 is determined to be migrated to PM4 (live migration) (S04; node generation step). However, in this case, since the two virtual call processing servers 21 are hosted by one physical server 20, each of the amounts allocated to the VM3 and VM4 is changed from 10000 MHz to 5000 MHz.

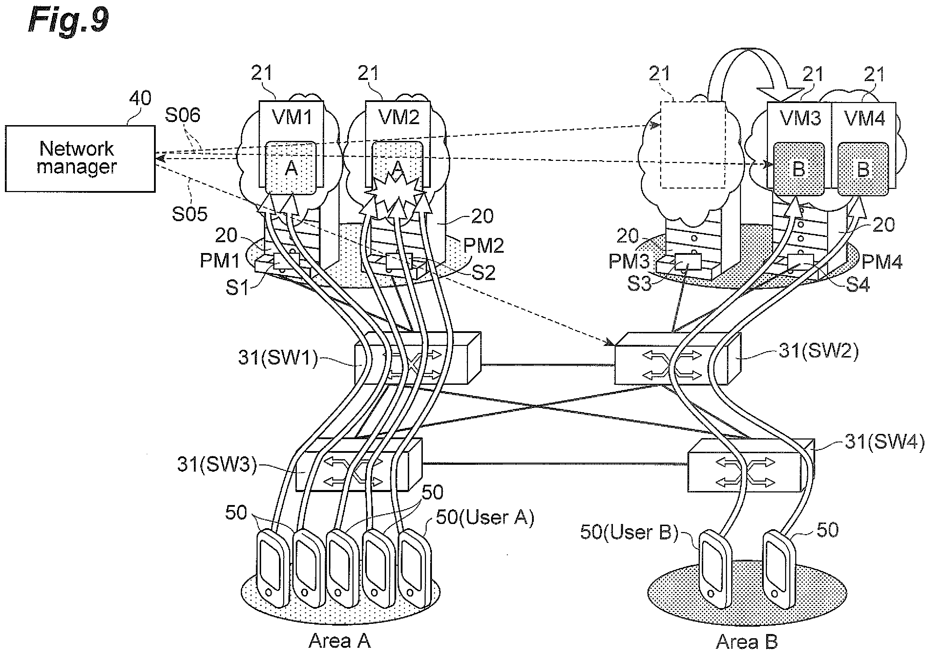

Then, a flow table of SW2 connected to PM3 and PM4, which is a flow table for VM migration, is set for data movement of VM3 from PM3 to PM4 by the node generation unit 42, as also illustrated in a configuration diagram of Fig. 9 (S05; node generation step). Specifically, a flow entry for VM migration of the flow table of SW2 illustrated in Fig. 7(b) for relaying data from PM3 to PM4 is added. In addition, when an individual line for VM migration (other than the OpenFlow network) is provided between VM3 and VM4, this process (operation) is unnecessary.

Then, as also illustrated in the configuration diagram of Fig. 9, a hypervisor of PM3 and PM4 is instructed by the node generation unit 42, and migration control (migration) is performed to accommodate VM3 in PM4 (S06; node generation step). In PM3 and PM4, a migration process is performed.

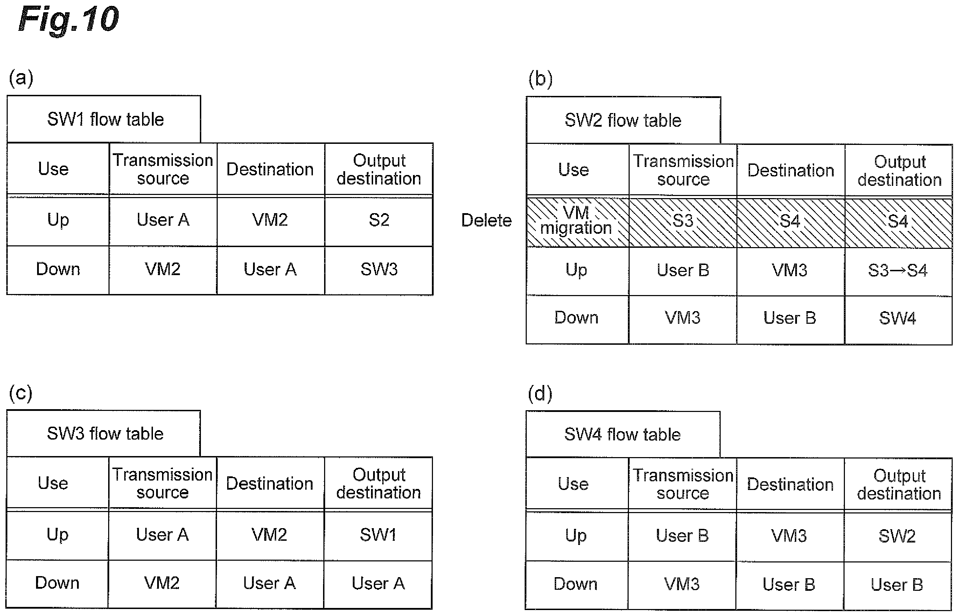

When the migration process ends, process completion is reported from PM3 to the network manager 40 (S07). In the network manager 40, a process completion report is received by the node generation unit 42, and this fact is input to the control unit 43. Then, in response to migration process completion, a flow in the OpenFlow network 30 is changed in order to distribute all flows related to the mobile communication terminal 50 (user) (in Figs. 5 and 9, user B), which have been processed in VM3 accommodated in PM3 until then, to PM4 (for S4) by the control unit 43 (S08; control step). Specifically, the output destination of the flow entry of SW2 for Up from user B to VM3 is modified from S3 related to VM3 into S4 related to VM4, as illustrated in Fig. 10(b). In addition, the flow entry for VM migration of SW2 is deleted. In addition, if there is originally a physical server 20 having a large available capacity, scaling of the VM2 is directly performed by the physical server 20 and the process of S05 to S08 is omitted.

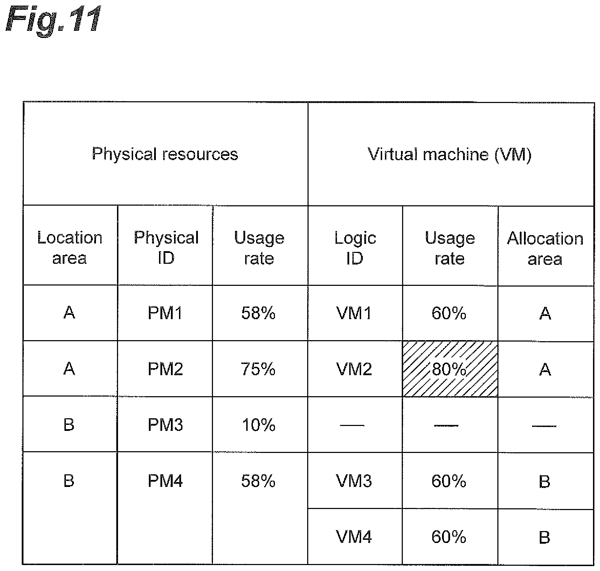

As a result of the process up to S08, the values of the virtual server resource management table are as illustrated in Fig. 11. As illustrated in Fig. 11, VM3 and VM4 are realized in PM4, and no virtual call processing server 21 is realized in PM3.

Then, a flow table for VM migration is set for data movement (data replication) of VM2 from PM2 to PM3 by the node generation unit 42. This process is the same process as S05 and is not illustrated.

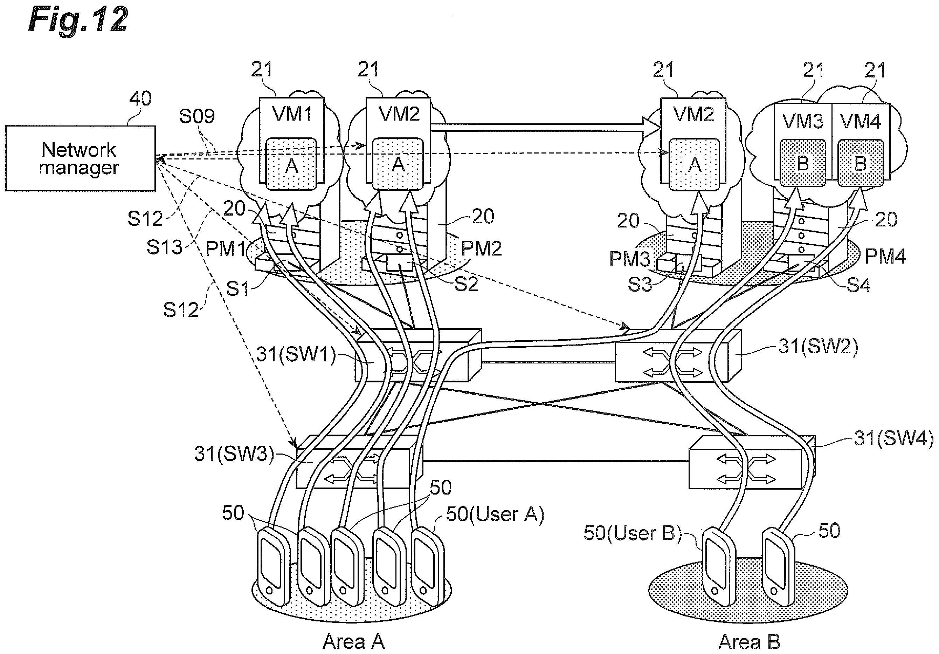

Subsequently, the node generation unit 42 instructs PM3 and PM2 to perform replication of VM2 (scale of VM2) hosted by PM2 to PM3, as also illustrated in a configuration diagram of Fig. 12 (S09; node generation step). A replication process is performed in PM3 and PM2. In addition, an operation stop process is performed in VM2 prior to the replication process.

When the replication process ends, process completion is reported from PM2 to the network manager 40 (S10). In the network manager 40, a process completion report is received by the node generation unit 42, and this fact is input to the control unit 43. The PM2 is then instructed to resume a VM2 operation by the node generation unit 42 (S11). In PM2, the instruction is received and a VM2 operation resuming process is performed. Accordingly, the VM2 operates on the physical servers 20 of both PM2 and PM3.

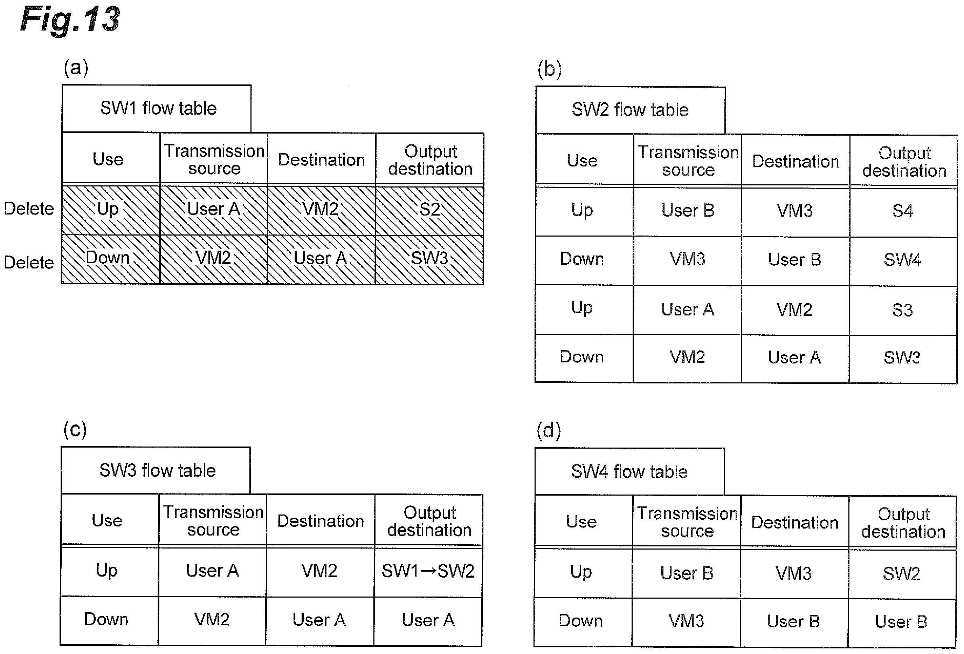

Further, as illustrated in a configuration diagram of Fig. 12, in response to replication process completion, SW2 and SW3 are subjected to flow control by the control unit 43, so that a half (user A in Figs. 2, 9 and 12) of the signal (traffic) related to VM2 is diverted into (VM2 of) PM3 (so that a signal is transmitted and received between user A and PM3) (S12; control step). Specifically, a flow entry in which a signal of Up from user A (transmission source) to VM2 (destination) is output to S3 that is the output destination related to PM3 is added to SW2, and a flow entry in which a signal of Down from VM2 (transmission source) to user A (destination) is output to SW3 is also added to SW2, as illustrated in Fig. 13(b). In addition, in SW3, the output destination of the flow entry for Up from user A (transmission source) to VM2 (destination) is modified from SW1 connected to PM2 to SW connected to PM3, as illustrated in Fig. 13(c).

In addition, in the flow setting of S12, the flow is set in an order in which the transmission source of the signal (user data) appears later to prevent loss of a packet. In addition, this order is reversed in a signal of Up and a signal of Down.

Further, the flow entries for the mobile communication terminal 50 (user) in which the signal is distributed to PM3 are deleted from the flow table of SW1 by the control unit 43, as illustrated in the configuration diagram of Fig. 12, and Fig. 13(a) (S13; control step).

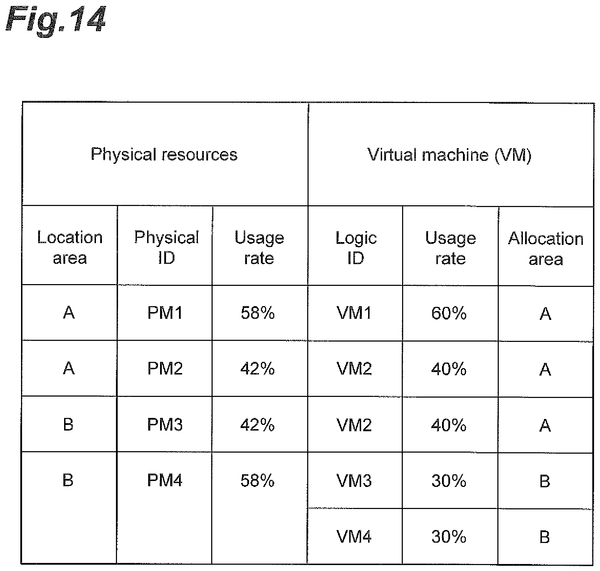

As a result of the above-described process, values of the virtual server resource management table are as illustrated in Fig. 14. Since the usage rate of the VM2 equal to or more than the threshold is distributed to the two physical servers 20 of PM2 and PM3, the usage rate becomes less than the threshold and a high load state has been resolved, as illustrated in Fig. 14.

In addition, the virtual call processing server 21 realized on PM3 may not be a replication of VM2 realized on PM2, but provisioning may be performed as a new virtual call processing server 21 that receives a new communication process (communication call processing). In this case, distribution of the communication process (call processing) performed in VM2 of PM2 is not performed. This is a process executed in the network manager 40 according to the embodiment and the mobile communication system 1.

As described above, according to the embodiment, the virtual call processing server 21 in each area is generated on the physical server 20 based on the processing load of the communication process of the physical server 20, and a signal related to the communication process is transmitted to the generated virtual call processing server 21. Therefore, it is possible to dynamically provide (increase or decrease) process resources necessary in the area. For example, as described above, it is possible to mutually accommodate the process resources, including those of other areas, as the physical server 20 in area B is used when the process resources in area A are insufficient. Accordingly, it is possible to secure the process resources necessary in the area and increase facility use efficiency in the mobile communication network.

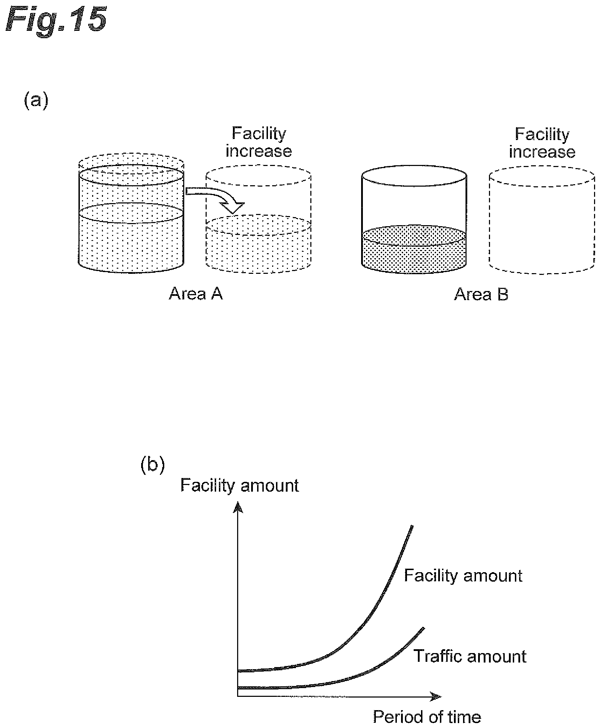

In the conventional mobile communication network, when processing load increases temporarily in the individual area, facility increase is necessary to avoid the congestion, as illustrated in Fig. 15(a). As illustrated in Fig. 15(b), when a traffic amount increases according to a period of time, the amount of the facility should be greatly increased to appropriately process the traffic according to the increase. Accordingly, the facility use efficiency was degraded.

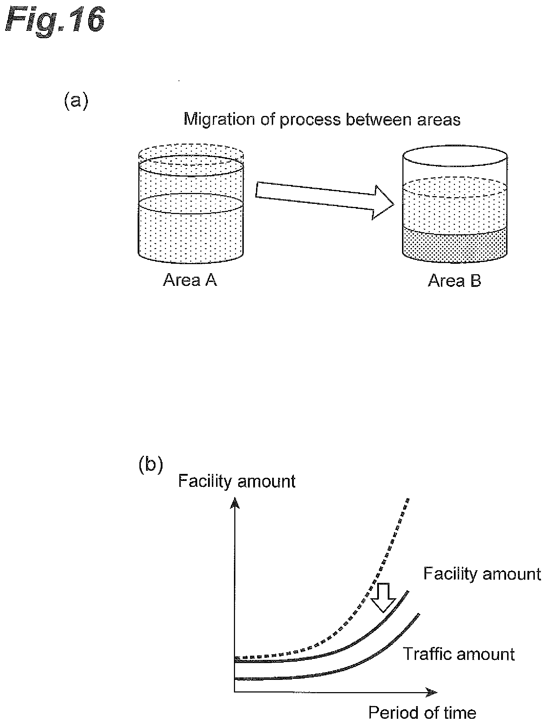

On the other hand, according to the embodiment, even when the processing load necessary in the area exceeds the process resources of facilities, it is possible to make facilities of other areas available, as illustrated in Fig. 16(a). Accordingly, it is possible to greatly suppress increase in an amount of facility in comparison with a conventional mobile communication network when the traffic amount increases according to a period of time, as illustrated in Fig. 16(b). Accordingly, it is possible to improve facility use efficiency.

In addition, the generation of the virtual call processing server 21 by the node generation unit 42 may be performed based on a history of the processing load of the communication process, as in the embodiment. In accordance with this configuration, it is possible to perform securing of the process resources according to time in advance, improve the facility use efficiency, and prevent a congestion state or the like in advance.

In addition, the generation of the virtual call processing server 21 by the node generation unit 42 may be performed based also on the number of mobile communication terminals present in each area, as in the embodiment. In accordance with this configuration, it is possible to perform securing of process resources and improvement of the facility use efficiency more appropriately.

In addition, a flow control network such as the OpenFlow network may be used for relay of the signal related to the communication process, as in the embodiment. In accordance with this configuration, it is possible to perform signal transmission (distribution) appropriately and reliably and thus perform the present invention appropriately and reliably.

### Reference Signs List

1 ... mobile communication system, 2 ... base, 10 ... call processing management database, 20 ... physical server, 21 ... virtual call processing server, 30 ... OpenFlow network, 31 ... node, 40 ... network manager, 41 ... detection unit, 42 ... node generation unit, 43 ... control unit, 50 ... mobile communication terminal, 60 ... facing node, 101 ... CPU, 102 ... RAM, 103 ... ROM, 104 ... communication module, 105 ... auxiliary storage device.

## Claims

1. A control node for a mobile communication system (1) including one or more communication processing nodes realized on any of one or more physical servers in association with an area in which a mobile communication terminal (50) is present, the one or more communication processing nodes performing a communication process of the mobile communication terminal (50), the control node comprising:
a detection means configured to detect processing load of the communication process performed by the one or more communication processing nodes of each physical server;
a node deployment means configured to deploy the one or more communication processing nodes for each area that are realized on the physical server (20) by replication, migration, or addition of anyone of the one or more processing nodes, based on the processing load of the communication process performed by the one or more communication processing nodes detected by the detection means, wherein addition of anyone of the one or more processing nodes indicates that the anyone of the one or more communication processing nodes is realized on the physical server (20),
migration of anyone of the one or more processing nodes indicates that the anyone of the one or more communication processing nodes realized on one or more different physical servers of the one or more physical servers is realized on the physical server (20),
replication of anyone of the one or more processing nodes indicates that the anyone of the one or more communication processing nodes already realized on another one physical server of the one or more physical servers is also realized on the physical server (20); and
a control means configured to perform control to transmit a signal related to the communication process from the mobile communication terminal (50) to the one or more communication processing node (50) deployed in association with the area in which the mobile communication terminal (50) is present by the node deployment means.

2. The control node according to claim 1, wherein the node deployment means deploys the communication processing node for each area that is realized on the physical server according to time, based on a history of the processing load of the communication process detected by the detection means.

3. The control node according to claim 1 or 2, wherein:
the detection means detects the number of mobile communication terminals present in each area, and
the node deployment means deploys the one or more communication processing node for each area that are realized on the physical server, based also on the number of mobile communication terminals present in each area detected by the detection means.

4. The control node according to any one of claims 1 to 3, wherein:
the mobile communication system further includes a flow control network, and
the control means configures the flow control network to transmit the signal related to the communication process from the mobile communication terminal (50) to one of the one or more communication processing nodes associated with the area in which the mobile communication terminal (50) is present.

5. A communication control method in a control node included in a mobile communication system including one or more communication processing nodes realized on any of one or more physical servers in association with an area in which a mobile communication terminal (50) is present, the one or more communication processing nodes performing a communication process of the mobile communication terminal (50), the communication control method comprising:
a detection step of detecting processing load of the communication process performed by the one or more communication processing nodes of each physical server;
a node deployment step of deploying the one or more communication processing node for each area that is realized on the physical server, by replication, migration, or addition of anyone of the one or more processing nodes, based on the processing load of the communication process performed by the one or more communication processing nodes detected in the detection step, wherein
addition of anyone of the one or more processing nodes indicates that the anyone of the one or more communication processing nodes is realized on the physical server (20),
migration of anyone of the one or more processing nodes indicates that the anyone of the one or more communication processing nodes realized on one or more different physical servers of the one or more physical servers is realized on the physical server (20),
replication of anyone of the one or more processing nodes indicates that the anyone of the one or more communication processing nodes already realized on another one physical server of the one or more physical servers is also realized on the physical server (20); and
a control step of performing control to transmit a signal related to the communication process from the mobile communication terminal (50) to the one or more communication processing node deployed in association with the area in which the mobile communication terminal (50) is present in the node generation step.

## Patentansprüche

1. Steuerknoten für ein Mobilkommunikationssystem (1) mit einem oder mehreren Kommunikationsverarbeitungsknoten, die auf einem oder mehreren physischen Servern in Zuordnung zu einem Bereich realisiert sind, in dem sich ein Mobilkommunikationsendgerät (50) befindet, wobei der eine oder die mehreren Kommunikationsverarbeitungsknoten einen Kommunikationsprozess des mobilen Kommunikationsendgeräts (50) durchführen, wobei der Steuerknoten aufweist:
ein Erfassungsmittel, das konfiguriert ist, um die Verarbeitungslast des Kommunikationsprozesses zu erfassen, der von dem einen oder den mehreren Kommunikationsverarbeitungsknoten jedes physischen Servers ausgeführt wird;
ein Knotenbereitstellungsmittel, das konfiguriert ist, um den einen oder die mehreren Kommunikationsverarbeitungsknoten für jeden Bereich bereitzustellen, die auf dem physischen Server (20) durch Replikation, Migration oder Hinzufügen eines oder mehrerer der einen oder mehreren Verarbeitungsknoten basierend auf der Verarbeitungslast des Kommunikationsprozesses bereitstellt, der von dem einen oder den mehreren Kommunikationsverarbeitungsknoten durchgeführt wird, die von dem Erfassungsmittel erfasst wurden, wobei
das Hinzufügen eines beliebigen der einen oder mehreren Verarbeitungsknoten anzeigt, dass der beliebige der einen oder mehreren Kommunikationsverarbeitungsknoten auf dem physischen Server (20) realisiert ist.
die Migration eines beliebigen der einen oder mehreren Verarbeitungsknoten anzeigt, dass der beliebige der einen oder mehreren Kommunikationsverarbeitungsknoten bereits auf einem oder mehreren anderen physischen Server der einen oder mehreren physischen Server auf dem physischen Server (20) realisiert ist,
die Replikation eines beliebigen der einen oder der mehreren Verarbeitungsknoten anzeigt, dass der beliebige der einen oder der mehreren Kommunikationsverarbeitungsknoten, der bereits auf einem anderen physischen Server der einen oder mehreren physischen Servern realisiert ist, auch auf dem physischen Server (20) realisiert ist, und
ein Steuermittel, das konfiguriert sind, um eine Steuerung durchzuführen, um ein Signal, das sich auf den Kommunikationsprozess bezieht, von dem mobilen Kommunikationsendgerät (50) zu dem einen oder den mehreren Kommunikationsverarbeitungsknoten (50), die in Zuordnung mit dem Bereich eingesetzt sind, in dem sich das mobile Kommunikationsendgerät (50) befindet, durch das Knotenbereitstellungsmittel zu übertragen.

2. Steuerknoten gemäß Anspruch 1, wobei das Knotenbereitstellungsmittel den Kommunikationsverarbeitungsknoten für jeden Bereich, der auf dem physischen Server realisiert ist, gemäß Zeit bereitstellt, basierend auf einer Historie der Verarbeitungslast des Kommunikationsprozesses, der von dem Erfassungsmittel erfasst wurde.

3. Steuerknoten gemäß Anspruch 1 oder 2, wobei:
das Erfassungsmittel die Anzahl von Mobilkommunikationsendgeräten erfasst, die in jedem Bereich vorhanden sind, und
die Knotenbereitstellungseinrichtung den einen oder die mehreren Kommunikationsverarbeitungsknoten für jeden Bereich bereitstellt, der auf dem physischen Server realisiert ist, auch basierend auf der Anzahl von Mobilkommunikationsterminals, die in jedem Bereich vorhanden sind, der von dem Erfassungsmittel erfasst wurde.

4. Steuerknoten gemäß einem der Ansprüche 1 bis 3, wobei:
das Mobilkommunikationssystem ferner ein Flusssteuerungsnetzwerk aufweist, und
das Steuermittel konfiguriert das Flusssteuerungsnetzwerk so, dass es das Signal, das sich auf den Kommunikationsprozess bezieht, von dem mobilen Kommunikationsendgerät (50) zu einem der einen oder mehreren Kommunikationsverarbeitungsknoten überträgt, die dem Bereich zugeordnet sind, in dem sich das mobile Kommunikationsendgerät (50) befindet.

5. Kommunikationssteuerverfahren in einem Steuerknoten, der in einem Mobilkommunikationssystem enthalten ist, das einen oder mehrere Kommunikationsverarbeitungsknoten enthält, die auf einem oder mehreren physischen Servern in Zuordnung zu einem Bereich realisiert sind, in dem sich ein Mobilkommunikationsendgerät (50) befindet, wobei der eine oder die mehreren Kommunikationsverarbeitungsknoten einen Kommunikationsprozess des mobilen Kommunikationsendgeräts (50) durchführen, wobei das Kommunikationssteuerverfahren aufweist:
einen Erfassungsschritt zum Erfassen der Verarbeitungslast des Kommunikationsprozesses, der von dem einen oder den mehreren Kommunikationsverarbeitungsknoten jedes physischen Servers ausgeführt wird;
einen Knotenbereitstellungsschritt zum Bereitstellen des einen oder der mehreren Kommunikationsverarbeitungsknoten für jeden Bereich, der auf dem physischen Server realisiert ist, durch Replikation, Migration oder Hinzufügen eines beliebigen des einen oder der mehrerer Verarbeitungsknoten, basierend auf der Verarbeitungslast des Kommunikationsprozesses, der von dem einen oder den mehreren Kommunikationsverarbeitungsknoten, die in dem Erfassungsschritt erfasst wurden, ausgeführt wird, wobei
das Hinzufügen eines beliebigen der einen oder mehreren Verarbeitungsknoten anzeigt, dass der beliebige der einen oder mehreren Kommunikationsverarbeitungsknoten auf dem physischen Server (20) realisiert ist,
die Migration eines beliebigen der einen oder mehreren Verarbeitungsknoten anzeigt, dass einer oder mehrere Kommunikationsverarbeitungsknoten, die auf einem oder mehreren anderen physischen Servern der einen oder mehreren physischer Server realisiert sind, auf dem physischen Server (20) realisiert sind,
die Replikation eines beliebigen der einen oder mehreren Verarbeitungsknoten anzeigt, dass der beliebige der einen oder mehreren Kommunikationsverarbeitungsknoten, der bereits auf einem anderen physischen Server der einen oder mehreren physischen Server realisiert ist, auch auf dem physischen Server (20) realisiert ist, und
ein Steuerschritt zum Durchführen einer Steuerung zum Übertragen eines Signals, das sich auf den Kommunikationsprozess bezieht, von dem Mobilkommunikationsendgerät (50) zu dem einen oder den mehreren Kommunikationsverarbeitungsknoten, die in Zuordnung mit dem Bereich eingesetzt sind, in dem sich das Mobilkommunikationsendgerät (50) befindet, in dem Knotenerzeugungsschritt.

## Revendications

1. Nœud de commande d'un système de communication mobile (1) comprenant un ou plusieurs nœuds de traitement des communications réalisés sur n'importe lequel d'un ou de plusieurs serveurs physiques en association avec une zone dans laquelle est présent un terminal de communication mobile (50), le ou les nœuds de traitement des communications exécutant un processus de communication du terminal de communication mobile (50), le nœud de commande comprenant :
des moyens de détection, configurés pour détecter la charge de traitement du processus de communication qu'exécutent le ou les nœuds de traitement des communications de chaque serveur physique ;
des moyens de déploiement de nœud, configurés pour déployer le ou les nœuds de traitement des communications de chaque zone qui sont réalisés sur le serveur physique (20) par reproduction, migration, ou ajout de n'importe lequel du ou des nœuds de traitement, sur la base de la charge de traitement du processus de communication qu'exécutent le ou les nœuds de traitement des communications détectés par les moyens de détection, où
un ajout de n'importe lequel du ou des nœuds de traitement, indique que n'importe lequel des nœuds de traitement des communications, est réalisé sur le serveur physique (20),
une migration de n'importe lequel du ou des nœuds de traitement, indique que n'importe lequel des nœuds de traitement des communications réalisé sur un ou plusieurs serveurs physiques différents du ou des serveurs physiques, est réalisé sur le serveur physique (20),
une reproduction de n'importe lequel du ou des nœuds de traitement, indique que n'importe lequel des nœuds de traitement des communications déjà réalisé sur un autre serveur physique du ou des serveurs physiques, est également réalisé sur le serveur physique (20) ; et
des moyens de commande, configurés pour exécuter une commande visant à transmettre un signal associé au processus de communication, en provenance du terminal de communication mobile (50) vers le ou les nœuds de traitement des communications déployés en association avec la zone dans laquelle est présent le terminal de communication mobile (50), à l'aide des moyens de déploiement de nœud.

2. Nœud de commande selon la revendication 1, où les moyens de déploiement de nœud déploient le nœud de traitement des communications de chaque zone, qui est réalisé sur le serveur physique selon le temps, sur la base d'un historique de la charge de traitement du processus de communication, que détectent les moyens de détection.

3. Nœud de commande selon la revendication 1 ou 2, où :
les moyens de détection détectent le nombre de terminaux de communication mobile présents dans chaque zone, et
les moyens de déploiement de nœud déploient un ou plusieurs nœuds de traitement des communications de chaque zone qui sont réalisés sur le serveur physique, sur la base également du nombre de terminaux de communication mobile présents dans chaque zone, que détectent les moyens de détection.

4. Nœud de commande selon l'une quelconque des revendications 1 à 3, où :
le système de communication mobile comprend en outre un réseau de commande de flux, et
les moyens de commande configurent le réseau de commande de flux afin de transmettre le signal associé au processus de communication, en provenance du terminal de communication mobile (50) vers le ou les nœuds de traitement des communications associés à la zone dans laquelle est présent le terminal de communication mobile (50).

5. Procédé de commande de communication dans un nœud de commande inclus dans un système de communication mobile comprenant un ou plusieurs nœuds de traitement des communications réalisés sur n'importe lequel d'un ou de plusieurs serveurs physiques en association avec une zone dans laquelle est présent un terminal de communication mobile (50), le ou les nœuds de traitement des communications exécutant un processus de communication du terminal de communication mobile (50), le procédé de commande de communication comprenant :
une étape de détection, consistant à détecter la charge de traitement du processus de communication qu'exécutent le ou les nœuds de traitement des communications de chaque serveur physique ;
une étape de déploiement de nœud, consistant à déployer le ou les nœuds de traitement des communications de chaque zone, qui sont réalisés sur le serveur physique, par reproduction, migration, ou ajout de n'importe lequel du ou des nœuds de traitement, sur la base de la charge de traitement du processus de communication qu'exécutent le ou les nœuds de traitement des communications détectés dans l'étape de détection, où
un ajout de n'importe lequel du ou des nœuds de traitement, indique que n'importe lequel des nœuds de traitement des communications, est réalisé sur le serveur physique (20),
une migration de n'importe lequel du ou des nœuds de traitement, indique que n'importe lequel des nœuds de traitement des communications réalisé sur un ou plusieurs serveurs physiques différents du ou des serveurs physiques, est réalisé sur le serveur physique (20),
une reproduction de n'importe lequel du ou des nœuds de traitement, indique que n'importe lequel des nœuds de traitement des communications déjà réalisé sur un autre serveur physique du ou des serveurs physiques, est également réalisé sur le serveur physique (20) ; et
une étape de commande, consistant à exécuter une commande visant à transmettre un signal associé au processus de communication, en provenance du terminal de communication mobile (50) vers le ou les nœuds de traitement des communications déployés en association avec la zone dans laquelle est présent le terminal de communication mobile (50), dans l'étape de génération de nœud.
